# EUROPEAN PATENT APPLICATION

(11) **EP 4 794 126 A1**
(43) Date of publication of application: **19.08.2026**
(21) Application number: 26150241.3
(22) Date of filing: 05.01.2026
(51) Int. Cl.: H01R 4/34, H01R 4/64, H01R 13/74, B60R 16/03

(54) **GROUND TERMINAL**

(30) Priority: 18.02.2025 US 202519055803
(71) Applicant: Aptiv Technologies AG, 8200 Schaffhausen (CH)
(72) Inventor: FISH, Ethan, 8200 Schaffhausen (CH); COTTRILL, Jeffrey, 8200 Schaffhausen (CH); WEBER, Wesley W., 8200 Schaffhausen (CH); CAMPBELL, Jeffrey, 8200 Schaffhausen (CH); PETERSON, David R., 8200 Schaffhausen (CH); WEIDNER, Jonathan D., 8200 Schaffhausen (CH); BILAS, Jared, 8200 Schaffhausen (CH)
(74) Representative: Bardehle Pagenberg Partnerschaft mbB Patentanwälte Rechtsanwälte

(57) **Abstract**

A ground terminal for a vehicle includes a plate having a surface extending in a first direction between a first side and a second side. The plate defines an aperture through the surface. A first tab extends from the first side of the plate in a second direction transverse to the first direction. The first tab is configured to attach to a housing of a vehicle wiring system.

## Description

### FIELD

The present disclosure relates to a ground terminal, and more particularly to a ground terminal for a vehicle that is configured to attach to a housing of a vehicle wiring system.

### BACKGROUND

Modem vehicles (e.g., automobiles) rely on electrical wiring and electrical connections to facilitate the transmission of electricity within, and between various components of, the vehicle. Wires may be cut to a predetermined length, terminated, bundled, routed, and secured in place under, over, between, through, etc. conduit, channels, or other wire routing aids, carpet, upholstery, sheet metal, and/or other structural components of the vehicle. For example, an adhesive and/or mechanical fastener may be used to secure a bundled wiring assembly (e.g., a wire harness) in place relative to a housing of a wiring system in a vehicle. The housing of the wiring system in turn may be fixed and/or attached to a vehicle substrate, such as a vehicle floor pan and/or adjacent metal vehicle structure, as a self-contained assembly separate from the vehicle structure to which it is fastened, in order to securely route the wiring assembly within the vehicle. For example, a threaded fastener may be used to secure the housing to the vehicle substrate. In some cases, the use of such threaded fasteners may also require a compression-limiting insert, which may be a metal insert that is fit, molded, assembled, etc. at intended mounting locations, to prevent the threaded fasteners from being over-torqued, which can damage or break the housing or surrounding channel, which may be plastic. The threaded fasteners may also be used with electrical ground terminals to create an electrical connection. Current designs may use stand-alone electrical ground terminals that are secured to the vehicle substrate, such as to sheet metal, using the threaded fastener.

While known wiring system housing fasteners and methods for attachment of vehicle wiring systems to vehicle substrates have proven acceptable for their intended purpose, a continuous need for improvement remains in the pertinent art to address the challenges associated with accurate and efficient assembly of vehicle wiring systems. For example, in some implementations, the fastening of the wiring system housing to the vehicle substrate using threaded fasteners, compression-limiting inserts, and stand-alone electrical ground terminals requires alignment of the multiple parts being held in appropriate positions for the fastening to occur.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

This section provides a general summary of the disclosure, and is not a comprehensive disclosure of its full scope or all of its features.

One aspect of the disclosure provides a ground terminal for a vehicle. The ground terminal includes a plate having a surface extending in a first direction between a first side and a second side. The plate defines an aperture through the surface. A first tab extends from the first side of the plate in a second direction transverse to the first direction. The first tab is configured to attach to a housing of a vehicle wiring system.

The details of one or more implementations of the disclosure are set forth in the accompanying drawings and the description below. Other aspects, features, advantages, and further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of a vehicle including an integrated wiring system according to the principles of the present disclosure.
FIG. 2 is a perspective view of an example of a portion of the integrated wiring system of FIG. 1 according to the principles of the present disclosure.
FIG. 3 is a perspective view of an example of a ground terminal of the portion of the integrated wiring system of FIG. 2 according to the principles of the present disclosure.
FIG. 4 is a perspective view of a cross-section of the portion of the integrated wiring system of FIG. 2, taken along line IV-IV of FIG. 2.
FIG. 5 is an exploded perspective view of another example of a portion of the integrated wiring system of FIG. 1 according to the principles of the present disclosure.
FIG. 6 is a perspective view of another example of a ground terminal of the portion of the integrated wiring system of FIG. 5 according to the principles of the present disclosure.
FIG. 7 is a cross-sectional view of the portion of the integrated wiring system of FIG. 5 in an assembled configuration, taken along line VII-VII of FIG. 5.

In the drawings, reference numbers may be reused to identify similar and/or identical elements.

### DETAILED DESCRIPTION

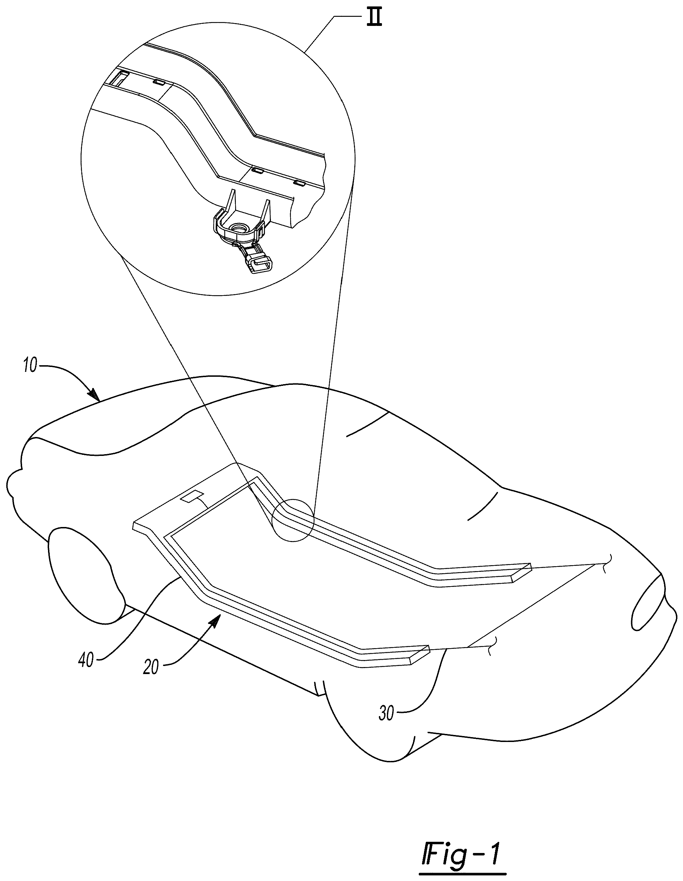

With reference to FIG. 1, a vehicle 10 including an integrated vehicle wiring system 20 is illustrated. The wiring system 20 may include a wiring subassembly 30 and a substrate, illustrated herein as a housing 40, among others. By way of non-limiting example, the wiring subassembly 30 may include a bundled wiring assembly, a wire harness, or any other suitable wiring arrangement. The housing 40 may be any suitable substrate for attachment of the wiring subassembly 30, non-limiting examples of which include conduits, channels, or any other suitable type of wire routing aids or guides. In an assembled configuration, as shown, the wiring subassembly 30 is attached to the housing 40. In one non-limiting example, the wiring subassembly 30 may be secured in place relative to the housing 40, such as by an adhesive and/or a mechanical fastener. The integrated wiring system 20 may be installed in the vehicle 10 as a single unit. The integrated wiring system 20 facilitates an automated, modular assembly process that saves installation time and mass and reduces installation errors, routing errors, and/or variability.

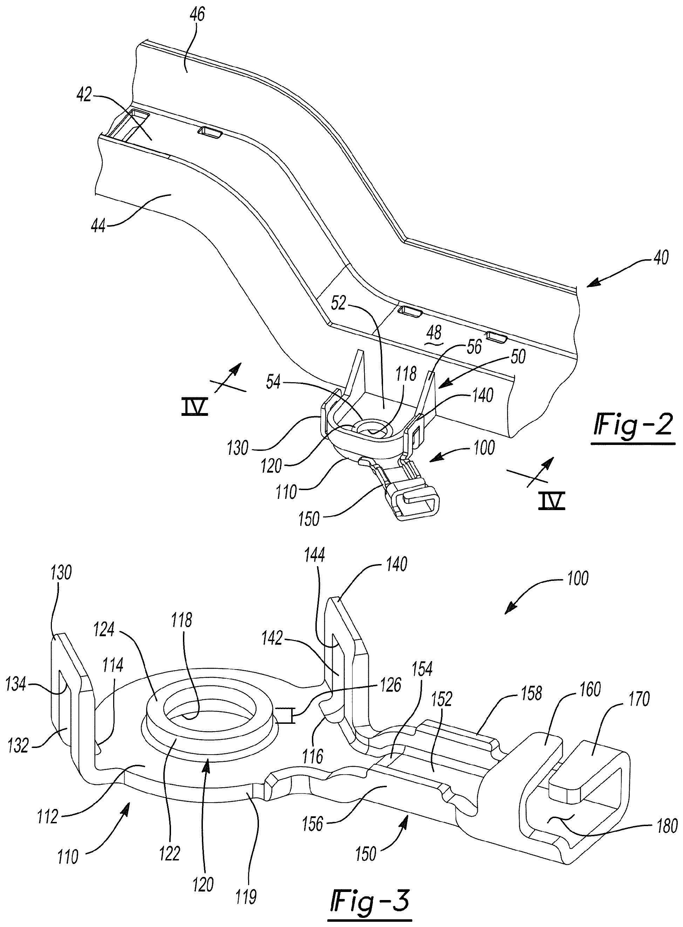

FIG. 2 illustrates an enlarged portion of an example of the housing 40 that may be used within the wiring system 20 of the vehicle 10. The housing 40 may include a bottom wall 42 and a pair of opposing side walls 44, 46, illustrated herein as a first side wall 44 and a second side wall 46, spaced from one another and extending upwardly from the bottom wall 42. The bottom wall 42, the first side wall 44, and the second side wall 46 collectively at least partially define a housing interior 48, within which the wiring assembly 30 (FIG. 1) may be disposed. While the housing 40 is illustrated herein as defining the housing interior 48 with an open top, it is understood that the housing 40 may have any suitable configuration, non-limiting examples of which include that the housing 40 may fully enclose the housing interior 48, or that the housing 40 may include only one of the side walls 44, 46. The housing 40 may be formed of any suitable material, non-limiting examples of which include a plastic, resin, or composite material.

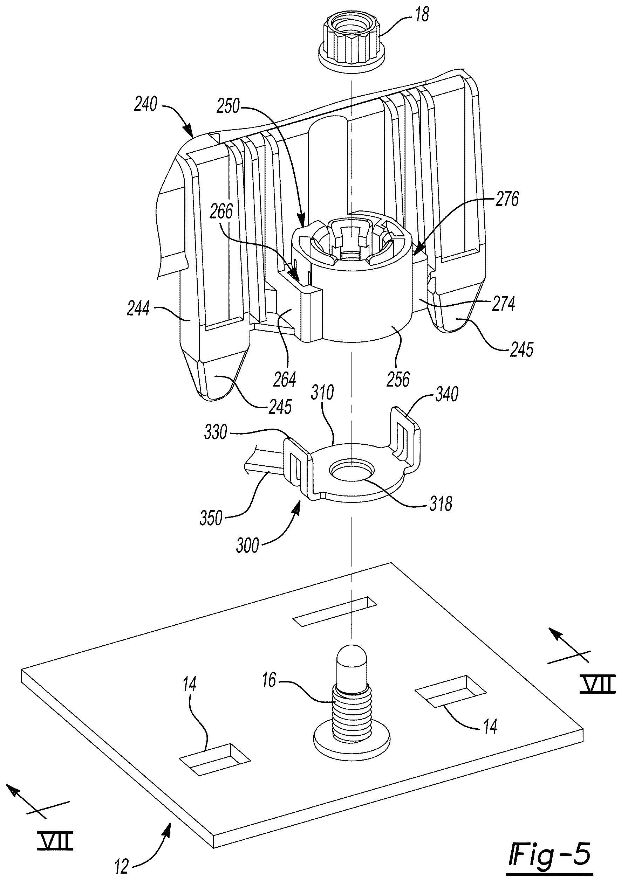

The housing 40 may further include at least one mounting foot 50 configured for attaching the housing 40, and therefore also the wiring system 20 (FIG. 1), to the vehicle 10 (FIG. 1). The mounting foot 50 may include a bottom mounting wall 52 defining a mounting opening 54 therethrough, and a peripheral side wall 56 extending upwardly from the bottom mounting wall 52. The size and position of the mounting opening 54 within the bottom mounting wall 52 may be selected to accommodate a fastener (FIG. 5) for mounting the housing 40 to a substrate (FIG. 5) within the vehicle 10 (FIG. 1). While the peripheral side wall 56 is illustrated herein as being continuous about the perimeter of the bottom mounting wall 52, it is understood that this is not limiting and that the peripheral side wall 56 could be provided discontinuously or only at portions of the perimeter of the bottom mounting wall 52.

In one example, the mounting foot 50, and particularly the bottom mounting wall 52, extends laterally outwardly from the first side wall 44 of the housing 40, such that the bottom mounting wall 52 is substantially (e.g., +/- ten degrees) parallel to and co-planar with the bottom wall 42 of the housing 40. However, it is understood that such relative position of the mounting foot 50 relative to the housing 40 is not limiting, and that the bottom mounting wall 52 may be parallel to but vertically offset from the bottom wall 42 of the housing 40, and/or that the bottom mounting wall 52 may be provided at an angle relative to the bottom wall 42 of the housing 40.

A ground terminal 100 may be configured to attach to the housing 40. In one example, the ground terminal 100 is configured to attach to the mounting foot 50 of the housing 40. The ground terminal 100 may include a plate 110 defining an aperture 118 through the plate 110. A collar 120 may surround the aperture 118 and project upwardly from the plate 110. The ground terminal 100 may include at least one tab 130, illustrated herein as a first tab 130, extending upwardly from the plate 110 and configured to attach the ground terminal 100 to the housing 40, specifically to the mounting foot 50 of the housing 40. As illustrated herein, the ground terminal 100 includes both the first tab 130 and a second tab 140 extending upwardly from the plate 110, with both the first and second tabs 130, 140 configured to attach the ground terminal 100 to the housing 40, specifically to the mounting foot 50 of the housing 40. However, it is understood that the number of tabs 130, 140 is not limiting and the ground terminal 100 may include any suitable number of tabs 130, 140, including only a single tab 130, or more than two tabs 130, 140. The ground terminal 100 may further include an arm 150 extending from the plate 110. The ground terminal 100 may be formed from any suitable material, non-limiting examples of which include metal or a metal alloy.

Referring now to FIG. 3, the plate 110 of the ground terminal 100 defines a surface 112 that extends between a first side 114 and a second side 116 of the plate 110 in a first direction. The second side 116 is opposite the first side 114 of the plate 110, such that the first side 114 and the second side 116 may be thought of as opposing edges or opposing portions of the surface 112 of the plate 110. While the surface 112 of the plate 110 extends in the first direction, the first and second tabs 130, 140 may extend upwardly from the surface 112 of the plate 110 in a second direction that is transverse to the first direction. In the illustrated example, the first tab 130 extends from the first side 114 of the surface 112 of the plate 110, while the second tab 140 extends from the second side 116 of the surface 112 of the plate 110, in the second direction, which may be substantially orthogonal to the first direction. In this example, the first and second tabs 130, 140 extend substantially orthogonally from and relative to the surface 112, though it is understood that this arrangement is not limiting and that the first and second tabs 130, 140 may be provided at any suitable angle relative to the surface 112.

The aperture 118 is defined through the surface 112 at a position between the first and second sides 114, 116. The plate 110 may be in the shape of a ring, as shown, wherein the aperture 118 is a centrally-positioned opening in the ring-shaped plate 110 and the first and second tabs 130, 140 extend from the opposing sides 114, 116 of the outer circumference or outer peripheral edge of the surface 112 of the ring-shaped plate 110, though it is understood that the plate 110 may alternately have a non-circular shape.

The collar 120 surrounds the aperture 118, such that the collar 120 projects from the surface 112 of the plate 110 along a circumference or periphery of the aperture 118, and extends upwardly from the surface 112 of the plate 110 in a third direction that is transverse to the first direction in which the surface 112 of the plate 110 extends. In one example, the third direction may be substantially orthogonal to the first direction, such that the collar 120 extends substantially orthogonally from and relative to the surface 112, though it is understood that an orthogonal arrangement is not limiting and that the collar 120 may be provided at any suitable angle relative to the surface 112. The collar 120 may define a collar side wall 122 terminating at an upper surface 124. The collar side wall 122 defines a collar height 126, which is the height of the collar side wall 122. The collar height 126 may also be thought of as the vertical distance between the surface 112 of the plate 110 and the upper surface 124.

The first and second tabs 130, 140 define first and second engagement apertures 132, 142, respectively, as well as first and second engagement surfaces 134, 144, respectively, that are configured to couple to the housing 40. The first and second tabs 130, 140 may be spaced apart from one another about the surface 112 of the plate 110 and extend from opposing portions or sides 114, 116 of the surface 112 of the plate 110, such that the first and second tabs 130, 140 are positioned directly opposite one another about the surface 112 of the plate 110, though it is understood that the first and second tabs 130, 140 are not limited to being directly opposite one another and may be provided at rotationally offset positions relative to one another about the surface 112 of the plate 110.

The arm 150 extends from a third side, illustrated herein as an edge 119, of the plate 110, in a fourth direction that may be substantially parallel to the first direction of the surface 112 of the plate 110. The arm 150 comprises an arm bottom wall 152, which may include a ramp or angled portion 154. When the angled portion 154 is included with the arm bottom wall 152, the arm 150, particularly the arm bottom wall 152, may be vertically offset from, but still substantially parallel to, the surface 112 of the plate 110. It is also understood that the inclusion of the angled portion 154 is not limiting, and the arm bottom wall 152 may be provided without the angled portion 154, such that the arm 150, particularly the arm bottom wall 152, is not vertically offset from, but rather co-planar with, the surface 112 of the plate 110. First and second arm side walls 156, 158 extend upwardly from opposite sides of the arm bottom wall 152. In one example, a first substrate-retaining clip 160 may extend inwardly from the first arm side wall 156, toward the second arm side wall 158, while a second substrate-retaining clip 170 extends inwardly from the second arm side wall 158, toward the first arm side wall 156. The arm 150, more specifically the arm bottom wall 152, and the first and second substrate-retaining clips 160, 170 may be thought of as collectively at least partially defining an arm channel 180 that may be configured to receive a portion of the wiring system 20 of the vehicle 10, such as a portion of the wiring subassembly 30. In one example, the plate 110 formed of a metal material may be used as a weld pad surface where wires, such as ground wires may be welded to the plate 110, and the retention of these welded wires within the arm channel 180 by the fist and second substrate-retaining clips 160, 170 can reduce or relieve strain on these wires.

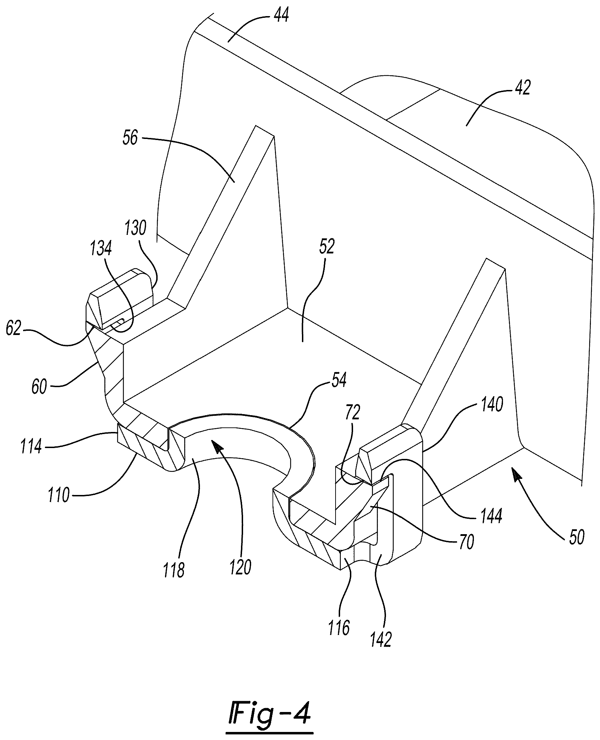

With reference to FIG. 4, the cross-sectional view of the ground terminal 100 in the assembled configuration with the mounting foot 50 illustrates better the features of the peripheral side wall 56 of the mounting foot 50. The peripheral side wall 56 may include a first engagement tab 60 and a second engagement tab 70. The first and second engagement tabs 60, 70 may define first and second tab engagement surfaces 62, 72, respectively. The first and second engagement tabs 60, 70 may extend laterally outwardly from the peripheral side wall 56, away from the bottom mounting wall 52. The first and second engagement tabs 60, 70 may be positioned directly opposite one another about the bottom mounting wall 52, and/or about the mounting opening 54, or the first and second engagement tabs 60, 70 may be provided at any suitable positions on the peripheral side wall 56 such that the first and second engagement tabs 60, 70 align with the first and second engagement apertures 132, 142 of the first and second tabs 130, 140 of the ground terminal 100.

With the ground terminal 100 and the mounting foot 50 in the assembled configuration, the first and second engagement tabs 60, 70 are received within the first and second engagement apertures 132, 142, respectively. Further, the first and second tab engagement surfaces 62, 72 may be in contact with and may bear against the first and second engagement surfaces 134, 144, respectively, of the first and second tabs 130, 140 of the ground terminal 100. In this way, the first and second engagement apertures 132, 142 of the first and second tabs 130, 140 are configured to receive the housing 40, and specifically the first and second engagement tabs 60, 70 of the peripheral side wall 56 of the mounting foot 50, in a snap fit engagement and/or a friction fit engagement. The coupling of the ground terminal 100 to the housing 40, by the receiving of the first and second engagement tabs 60, 70 within the first and second engagement apertures 132, 142, respectively, further restricts and/or prevents side-to-side, sliding, or rotational movement of the ground terminal 100 relative to the housing 40 in the assembled configuration. This improves ease of assembly of the wiring system 20 to the vehicle 10 by ensuring the ground terminal 100 and the housing 40 are held in proper alignment with one another for the application of a fastener.

Further, with the ground terminal 100 and the mounting foot 50 in the assembled configuration, the collar 120 is configured to be at least partially received within the mounting opening 54 in the bottom mounting wall 52 of the mounting foot 50. With the collar 120 received within the mounting opening 54, proper alignment of the ground terminal 100 and the housing 40 for fastening together is further ensured. Additionally, the collar height 126 (FIG. 3) may be equal to or slightly greater than the thickness of the bottom mounting wall 52, such that the collar 120 may protrude slightly above the bottom mounting wall 52. In the case that the bottom mounting wall 52 is formed of a plastic material and the collar 120 is formed of a metal material, the collar height 126 ensures that over-torqueing of a threaded fastener would not damage or compress the plastic bottom mounting wall 52, as the collar 120 is thus configured to act as a compression limiting insert for the bottom mounting wall 52.

Referring now to FIGs. 5-7, in various implementations, the wiring system 20 of the vehicle 10 can include another example of a housing 240 and another example of a ground terminal 300. The housing 240 and the ground terminal 300 of FIGs. 5-7 are similar to the housing 40 and the ground terminal 100 of FIGs. 2-4, therefore like numerals will be used to describe the housing 240 and the ground terminal 300 to those numerals used to describe the housing 40 and the ground terminal 100, but with the numerals increased by 200. It is understood that the description of like parts from the housing 40 and the ground terminal 100 also applies to the like parts of the housing 240 and the ground terminal 300.

The exploded view of FIG. 5 illustrates the housing 240 configured for attaching the wiring system 20 (FIG. 1) to the vehicle 10 (FIG. 1), and more specifically for attaching to a substrate 12 portion of the vehicle 10. The substrate 12 can be any suitable portion of the vehicle 10, non-limiting examples of which include a vehicle frame and/or a portion of the vehicle 10 that is formed of a metal material, such as a sheet metal. The substrate 12 may include at least one alignment aperture 14 and at least one threaded stud 16 configured to engage with the housing 240 and the ground terminal 300. The threaded stud 16 is also configured for threaded engagement with a threaded nut 18.

The housing 240 includes a first side wall 244. The first side wall 244 may include at least one alignment tab 245 configured to properly align the housing 240 with the vehicle substrate 12 by receiving of the at least one alignment tab 245 within the at least one alignment aperture 14 of the substrate 12. The housing 240 further includes at least one mounting foot 250 that is configured for attaching the housing 240 to the substrate 12. The mounting foot 250 extends laterally outwardly from the first side wall 244 of the housing 240 and includes a peripheral side wall 256. The peripheral side wall 256 further may include first and second tab receivers 264, 274 defining first and second tab slots 266, 276, respectively.

The ground terminal 300 is similar to the ground terminal 100, but the ground terminal 300 differs in that the collar 120 of the ground terminal 100 may not be included with the ground terminal 300. The ground terminal 300 may include the plate 310 defining an aperture 318 through the plate 310, as well as at least one tab 330, illustrated herein as a first tab 330 and a second tab 340, and an arm 350 extending from the plate 310. The arm 350 may be the same as the arm 150 of the ground terminal 100.

The first and second tabs 330, 340 are configured to attach the ground terminal 300 to the housing 240. Specifically, the first tab 330 is configured to be at least partially received within the first tab slot 266 of the first tab receiver 264, while the second tab 340 is configured to be at least partially received within the second tab slot 276 of the second tab receiver 274. Further, in an assembled configuration, the threaded stud 16 of the substrate extends through the aperture 318 of the ground terminal 300 and extends within the peripheral side wall 256 of the mounting foot 250 to be fastened with the threaded nut 18.

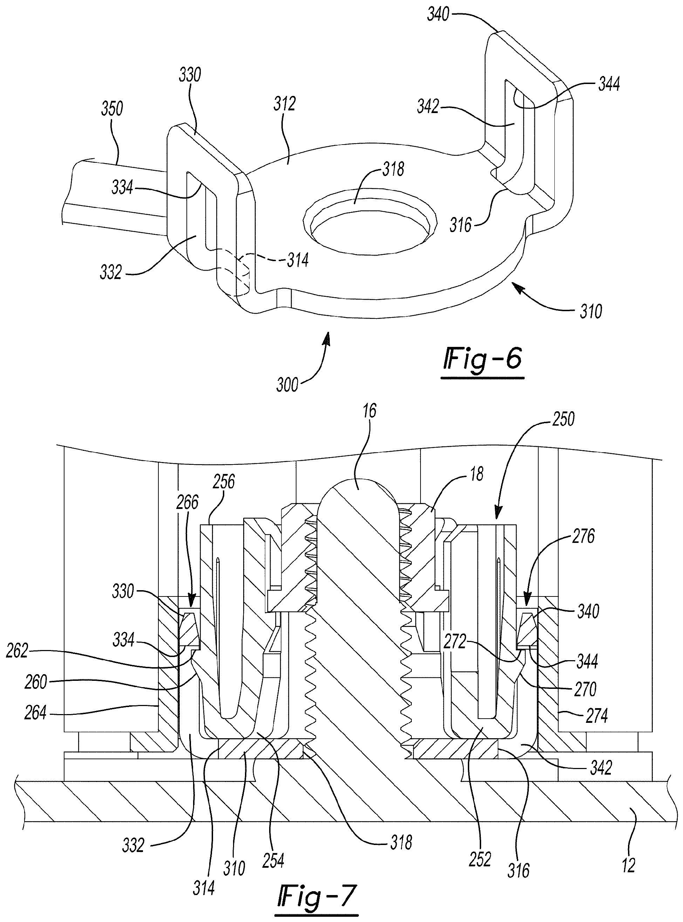

Referring now to FIG. 6, the plate 310 of the ground terminal 300 defines a surface 312 that extends between a first side 314 and a second side 316 of the plate 310 in the first direction, with the aperture 318 defined through the surface 312 at a position between the first and second sides 314, 316. The first tab 330 extends from the first side 314 of the surface 312 and defines a first attachment aperture 332 and a first engagement surface 334, while the second tab 340 extends from the second side 316 of the surface 312 and defines a second attachment aperture 342 and a second engagement surface 344.

With reference to FIG. 7, the cross-sectional view of the ground terminal 300 in the assembled configuration with the mounting foot 250 illustrates a bottom mounting wall 252 of the mounting foot 250 defining a mounting opening 254 through the bottom mounting wall 252, and the peripheral side wall 256 extending upwardly from the bottom mounting wall 252. The peripheral side wall 256 includes first and second engagement tabs 260, 270 defining first and second tab engagement surfaces 262, 272, respectively. In the assembled configuration, the first tab 330 may be received within the first tab slot 266 of the first tab receiver 264, such that the first engagement tab 260 is received within the first attachment aperture 332 of the first tab 330 and the first tab engagement surface 262 may be in contact with and may bear against the first engagement surface 334 of the first tab 330 in the snap fit or friction fit engagement. Likewise, the second tab 340 may be received within the second tab slot 276 of the second tab receiver 274, such that the second engagement tab 270 is received within the second attachment aperture 342 of the second tab 340 and the second tab engagement surface 272 may be in contact with and may bear against the second engagement surface 344 of the second tab 340 in the snap fit or friction fit engagement.

Further, with the ground terminal 300 and the mounting foot 250 in the assembled configuration with the substrate 12, the threaded stud 16 extends from the substrate 12, through the aperture 318 of the plate 310, and through the mounting opening 254 in the bottom mounting wall 252 of the mounting foot 250. The threaded nut 18 is fastened to the threaded stud 16 in a threaded engagement and is thus configured to fasten the mounting foot 250, and therefore also the housing 240 and the wiring system 20 (FIG. 1), and the ground terminal 300 to the substrate 12 of the vehicle 10 (FIG. 1). Such fastening ensures that the metal material of the plate 310 of the ground terminal 300 contacts the substrate 12 of the vehicle 10 (FIG. 1) to ensure proper electrical connection and grounding.

While the substrate 12, threaded stud 16, and threaded nut 18 are illustrated in use with the housing 240 and the ground terminal 300, the substrate 12, threaded stud 16, and threaded nut 18 may be provided in the same way for use with the housing 40 and the ground terminal 100. Further, while the ground terminal 100 is illustrated in use with the housing 40 and the ground terminal 300 is illustrated in use with the housing 240, it is understood that either the ground terminal 100 including the collar 120 or the ground terminal 300 without the collar 120 may be used with either the housing 40 having the mounting foot 50 or with the housing 240 having the mounting foot 250.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "proximate," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a ground terminal for a vehicle, as described above.

Clause 1: A ground terminal for a vehicle, the ground terminal comprising: a plate having a surface extending in a first direction between a first side and a second side, the plate defining an aperture through the surface; and a first tab extending from the first side of the plate in a second direction transverse to the first direction and configured to attach to a housing of a vehicle wiring system.

Clause 2: The ground terminal of clause 1, wherein the first tab defines an attachment aperture configured to couple to the housing.

Clause 3: The ground terminal of clause 2, wherein the attachment aperture is configured to receive the housing in at least one of a snap fit engagement or a friction fit engagement.

Clause 4: The ground terminal of clause 2 or clause 3, wherein coupling the attachment aperture to the housing prevents rotation of the ground terminal relative to the housing.

Clause 5: The ground terminal of any of clauses 1 through 4, further comprising a second tab extending from the second side of the plate and configured to attach to the housing.

Clause 6: The ground terminal of any of clauses 1 through 5, wherein the first side is opposite the second side.

Clause 7: The ground terminal of clause 5 or clause 6, wherein the first tab and the second tab extend from opposing edges of the surface of the plate.

Clause 8: The ground terminal of any of clauses 5 through 7, wherein the second tab extends from the second side of the plate in the second direction transverse to the first direction.

Clause 9: The ground terminal of any of clauses 1 through 8, wherein the plate comprises a ring defining the aperture through the surface.

Clause 10: The ground terminal of clause 9, wherein the first side is opposite the second side, and further wherein the opposing first and second tabs extend in the second direction from an outer peripheral edge of the ring.

Clause 11: The ground terminal of any of clauses 1 through 10, further comprising a collar surrounding the aperture and projecting from the surface of the plate.

Clause 12: The ground terminal of clause 11, wherein the collar extends from the surface of the plate in a third direction transverse to the first direction.

Clause 13: The ground terminal of clause 12, wherein the second direction and the third direction are both substantially orthogonal to the first direction.

Clause 14: The ground terminal of any of clauses 11 through 13, further comprising a second tab extending from the second side of the plate and configured to attach to the housing.

Clause 15: The ground terminal of clause 14, wherein the first tab and the second tab are spaced apart from one another and extend from opposing portions of the surface of the plate.

Clause 16: The ground terminal of clause 15, wherein the collar projects from the surface of the plate along the circumference of the aperture and the first and second tabs extend from opposing sides of the outer circumference of the surface of the plate.

Clause 17: The ground terminal of any of clauses 11 through 16, wherein the collar is configured to be at least partially received within an opening defined by the housing.

Clause 18: The ground terminal of any of clauses 1 through 17, further comprising an arm extending from a third side of the plate in a direction that is substantially parallel to the first direction.

Clause 19: The ground terminal of clause 18, wherein the arm comprises: a first substrate-retaining clip; and a second substrate-retaining clip; wherein the arm, the first substrate-retaining clip, and the second substrate-retaining clip define a channel configured to receive a portion of the vehicle wiring system.

Clause 20: An assembly (30) comprising: the ground terminal (100, 300) of clause 1, wherein the first tab defines an attachment aperture (332, 342) configured to couple to the housing (40, 240), the attachment aperture (332, 342) configured to receive the housing (40, 240) in at least one of a snap fit engagement or a friction fit engagement, the ground terminal (100, 300) further comprising: a second tab (130, 140, 330, 340) extending from the second side (114, 116, 314, 316) of the plate (110, 310) and configured to attach to the housing (40, 240); a collar (120) surrounding the aperture (14, 118, 132, 142, 318) and projecting from the surface of the plate (110, 310) in a third direction transverse to the first direction, wherein the collar (120) is configured to be at least partially received within an opening (54, 254) defined by the housing (40, 240); and an arm (150, 350) extending from a third side of the plate (110, 310) in a fourth direction that is substantially parallel to the first direction, the arm (150, 350) comprising: a first substrate-retaining clip; and a second substrate-retaining clip; wherein the arm (150, 350), the first substrate-retaining clip, and the second substrate-retaining clip define a channel (180) configured to receive a portion (154) of the vehicle wiring system (20).

## Claims

1. A ground terminal (100, 300) for a vehicle (10), the ground terminal (100, 300) comprising:
a plate (110, 310) having a surface extending in a first direction between a first side and a second side (114, 116, 314, 316), the plate (110, 310) defining an aperture (14, 118, 132, 142, 318) through the surface; and
a first tab extending from the first side of the plate (110, 310) in a second direction transverse to the first direction and configured to attach to a housing (40, 240) of a vehicle wiring system (20).

2. The ground terminal (100, 300) of claim 1, wherein the first tab defines an attachment aperture (332, 342) configured to couple to the housing (40, 240), and
wherein preferably the attachment aperture (332, 342) is configured to receive the housing (40, 240) in at least one of a snap fit engagement or a friction fit engagement.

3. The ground terminal (100, 300) of claim 2, wherein coupling the attachment aperture (332, 342) to the housing (40, 240) prevents rotation of the ground terminal (100, 300) relative to the housing (40, 240).

4. The ground terminal (100, 300) of any one of the preceding claims, further comprising a second tab (130, 140, 330, 340) extending from the second side (114, 116, 314, 316) of the plate (110, 310) and configured to attach to the housing (40, 240),
wherein preferably the first side is opposite the second side (114, 116, 314, 316).

5. The ground terminal (100, 300) of claim 4, wherein the first tab and the second tab (130, 140, 330, 340) extend from opposing edges of the surface of the plate (110, 310).

6. The ground terminal (100, 300) of claim 4 or 5, wherein the second tab (130, 140, 330, 340) extends from the second side (114, 116, 314, 316) of the plate (110, 310) in the second direction.

7. The ground terminal (100, 300) of any one of the preceding claims, wherein the plate (110, 310) comprises a ring defining the aperture (14, 118, 132, 142, 318) through the surface,
wherein preferably the first side is opposite the second side (114, 116, 314, 316), and further wherein the opposing first and second tabs (130, 140, 330, 340) extend in the second direction from an outer peripheral edge of the ring.

8. The ground terminal (100, 300) of any one of the preceding claims, further comprising a collar (120) surrounding the aperture (14, 118, 132, 142, 318) and projecting from the surface of the plate (110, 310),
wherein preferably the collar (120) extends from the surface of the plate (110, 310) in a third direction transverse to the first direction.

9. The ground terminal (100, 300) of claim 8, wherein the second direction and the third direction are both substantially orthogonal to the first direction.

10. The ground terminal (100, 300) of any one of the preceding claims, further comprising a second tab (130, 140, 330, 340) extending from the second side (114, 116, 314, 316) of the plate (110, 310) and configured to attach to the housing (40, 240),
wherein preferably the first tab and the second tab (130, 140, 330, 340) are spaced apart from one another and extend from opposing portions (154) of the surface of the plate (110, 310).

11. The ground terminal (100, 300) of claim 10, wherein the collar projects from the surface of the plate (110, 310) along the circumference of the aperture (14, 118, 132, 142, 318) and the first and second tabs (130, 140, 330, 340) extend from opposing sides of the outer circumference of the surface of the plate (110, 310).

12. The ground terminal (100, 300) of any one of the preceding claims 8 to 11, wherein the collar (120) is configured to be at least partially received within an opening (54, 254) defined by the housing (40, 240).

13. The ground terminal (100, 300) of any one of the preceding claims, further comprising an arm (150, 350) extending from a third side of the plate (110, 310) in a direction that is substantially parallel to the first direction.

14. The ground terminal (100, 300) of claim 13, wherein the arm (150, 350) comprises:
a first substrate-retaining clip; and
a second substrate-retaining clip,
wherein the arm (150, 350), the first substrate-retaining clip, and the second substrate-retaining clip define a channel (180) configured to receive a portion (154) of the vehicle wiring system (20).

15. An assembly (30) comprising:
the ground terminal (100, 300) of any one of the preceding claims, wherein the first tab defines an attachment aperture (332, 342) configured to couple to the housing (40, 240), the attachment aperture (332, 342) configured to receive the housing (40, 240) in at least one of a snap fit engagement or a friction fit engagement, the ground terminal (100, 300) further comprising:
a second tab (130, 140, 330, 340) extending from the second side (114, 116, 314, 316) of the plate (110, 310) and configured to attach to the housing (40, 240);
a collar (120) surrounding the aperture (14, 118, 132, 142, 318) and projecting from the surface of the plate (110, 310) in a third direction transverse to the first direction, wherein the collar (120) is configured to be at least partially received within an opening (54, 254) defined by the housing (40, 240); and
an arm (150, 350) extending from a third side of the plate (110, 310) in a fourth direction that is substantially parallel to the first direction, the arm (150, 350) comprising:
a first substrate-retaining clip; and
a second substrate-retaining clip,
wherein the arm (150, 350), the first substrate-retaining clip, and the second substrate-retaining clip define a channel (180) configured to receive a portion (154) of the vehicle wiring system (20).
